# EUROPEAN PATENT APPLICATION

(11) **EP 3 079 366 A1**
(43) Date of publication of application: **12.10.2016**
(21) Application number: 16163958.8
(22) Date of filing: 06.04.2016
(51) Int. Cl.: H04N 21/2343, H04N 21/422, H04N 21/441, H04N 21/61, H04N 21/643

(54) **METHOD AND APPARATUS FOR PROVIDING IMAGE SIGNAL RECEIVED USING SATELLITE ANTENNA TO PLURALITY OF USER TERMINALS**

(30) Priority: 09.04.2015 KR 20150050089
(71) Applicant: Idoit Co., Ltd., Siheung-si, Gyeonggi-do 15073 (KR)
(72) Inventor: IM, Seung Joon, Seoul 06587 (KR); KO, Jae Ho, Goyang-si, Gyeonggi-do 10325 (KR); HAN, Doo Ho, Seoul 08046 (KR)
(74) Representative: Awapatent AB

(57) **Abstract**

Provided is a satellite antenna control apparatus for providing, to a plurality of user terminals, an image signal converted into a form of Internet protocol (IP) data to be transmitted using an IP and a communication method thereof. The satellite antenna control apparatus includes a processor configured to convert a received image signal into IP data corresponding to IP-based transmission, allocate a first IP address to a first user terminal in response to a first request, and allocate a second IP address to a second user terminal in response to a second request.

## Description

### CROSS-REFERENCE TO RELATED APPLICATION

This application claims the priority benefit of Korean Patent Application No. 10-2015-0050089, filed on April 9, 2015, in the Korean Intellectual Property Office, the disclosure of which is incorporated herein by reference.

### BACKGROUND

### 1. Field of the Invention

Embodiments relate to a satellite antenna control apparatus and a communication method thereof, and more particularly, to a satellite antenna control apparatus for providing, to a plurality of user terminals, an image signal converted into a form of Internet protocol (IP) data to be transmitted using an IP and a communication method thereof.

### 2. Description of the Related Art

With increasing interests in outdoor activities, interests in an outdoor satellite antenna and a satellite antenna for a vehicle have been also increasing. In terms of a typical satellite antenna for a vehicle, a satellite signal may be provided to a user through a set-top box. Thus, the user may be allowed to view one channel at a time and disallowed to watch a television (TV) when separating from a vehicle by a predetermined distance.

Accordingly, there is a desire for a vehicular satellite antenna device for converting an image signal into a form of Internet protocol (IP) data to be transmitted based on an IP and allocating an IP address for each TV channel signal such that a plurality of user terminals access the IP address, and a communication method of the vehicular satellite antenna device.

### SUMMARY

According to an aspect, there is provided a satellite antenna control apparatus including a receiver configured to receive an image signal through a satellite antenna, receive a first request for a first television (TV) channel from a first user terminal, and receive a second request for a second TV channel from a second user terminal, a processor configured to convert the image signal into Internal protocol (IP) data corresponding to IP-based transmission, allocate a first IP address to the first user terminal in response to the first request, and allocate a second IP address to the second user terminal in response to the second request, and a transmitter configured to forward an image signal of the first TV channel extracted from the IP data to the first IP address and forward an image signal of the second TV channel extracted from the IP data to the second IP address such that each of the first user terminal and the second user terminal outputs an image of a corresponding TV channel.

The transmitter may be configured to use a wireless communication network to forward the image signal of the first TV channel to the first IP address and forward the image signal of the second TV channel to the second IP address, and the wireless communication network may include at least one of a Bluetooth communication network, a wireless fidelity (Wi-Fi) communication network, a Z-wave communication network, a ZigBee communication network, and a worldwide interoperability for microwave access (WiMAX) communication network.

The satellite antenna control apparatus may further include a remote controller configured to receive location control information from a user and transmit the received location control information to the processor such that the processor adjusts a location of the satellite antenna. The remote controller may be separable from the processor and configured to, through a separation from the processor, perform a remote control on the processor using a near filed communication network. The location control information may be information on an artificial satellite associated with at least one of the first TV channel and the second TV channel, and the processor is configured to search for the artificial satellite by calculating at least one of an elevation angle, an azimuth angle, and a skew corresponding to the information on the artificial satellite based on global positioning system (GPS) signals. The near field communication network may be based on at least one of an infrared ray (IR) channel and a radio frequency (RF) channel. When the remote controller receives a third request for a third TV channel from a third user terminal, the processor may be configured to allocate a third IP address to the third user terminal in response to the third request, and the remote controller may be configured to receive an image signal of the third TV channel extracted from the IP data from the transmitter and forward the received image signal to the third IP address such that the third user terminal outputs an image of the third TV channel.

According to another aspect, there is also provided an image signal communication method including receiving a first request for a first TV channel from a first user terminal, receiving a second request for a second TV channel from a second user terminal, allocating a first IP address to the first user terminal in response to the first request, allocating a second IP address to the second user terminal in response to the second request, and forwarding an image signal of the first TV channel to the first IP address and forwarding an image signal of the second TV channel to the second IP address.

The image signal communication method may further include receiving an image signal, converting the image signal into IP data corresponding to an IP-based transmission, and extracting the image signal of the first TV channel and the image signal of the second TV channel from the IP data.

The image signal communication method may further include receiving, by a remote controller separated from a satellite antenna, a third request for an image signal of a third TV channel from a third user terminal, allocating a third IP address to the third user terminal through the remote controller in response to the third request, and forwarding, by the remote controller, the received image signal of the third TV channel to the third IP address.

According to still another aspect, there is also provided a remote control apparatus including a receiver configured to receive a first request for a first TV channel from a first user terminal, receive a second request for a second TV channel from a second user terminal, receive first IP data corresponding to the first request from a satellite antenna, and receive second IP data corresponding to the second request from the satellite antenna, a processor configured to allocate a first IP address to the first user terminal in response to the first request and allocate a second IP address to the second user terminal in response to the second request, a transmitter configured to forward an image signal of the first TV channel corresponding to the first IP data to the first IP address and forward an image signal of the second TV channel corresponding to the second IP data to the second IP address such that each of the first user terminal and the second user terminal outputs an image of a corresponding TV channel, and a controller configured to control the processor to adjust a location of the satellite antenna by receiving location control information from a user and transmitting the received location control information to the processor.

The location control information may be information on an artificial satellite associated with at least one of the first TV channel and the second TV channel, and the processor may be configured to search for the artificial satellite by calculating at least one of an elevation angle, an azimuth angle, and a skew of the satellite antenna corresponding to the information on the artificial satellite based on GPS signals.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 illustrates an example of a satellite antenna control apparatus;
FIG. 2 is a block diagram illustrating an example of a satellite antenna control apparatus;
FIG. 3 illustrates an example of a satellite antenna control apparatus including a remote controller;
FIG. 4 is a block diagram illustrating another example of a satellite antenna control apparatus;
FIG. 5 is a flowchart illustrating an example of a communication method of a satellite antenna control apparatus and a user terminal; and
FIG. 6 is a flowchart illustrating another example of a communication method of a satellite antenna control apparatus and a user terminal.

### DETAILED DESCRIPTION

Hereinafter, some example embodiments will be described in detail with reference to the accompanying drawings. It should be understood, however, that there is no intent to limit this disclosure to the particular example embodiments disclosed. Like numbers refer to like elements throughout the description of the figures.

Terminologies used herein are defined to appropriately describe the example embodiments of the present disclosure and thus may be changed depending on a user, the intent of an operator, or a custom. Accordingly, the terminologies must be defined based on the following overall description of this specification.

It will be further understood that terms, such as those defined in commonly used dictionaries, should be interpreted as having a meaning that is consistent with their meaning in the context of the relevant art and will not be interpreted in an idealized or overly formal sense unless expressly so defined herein.

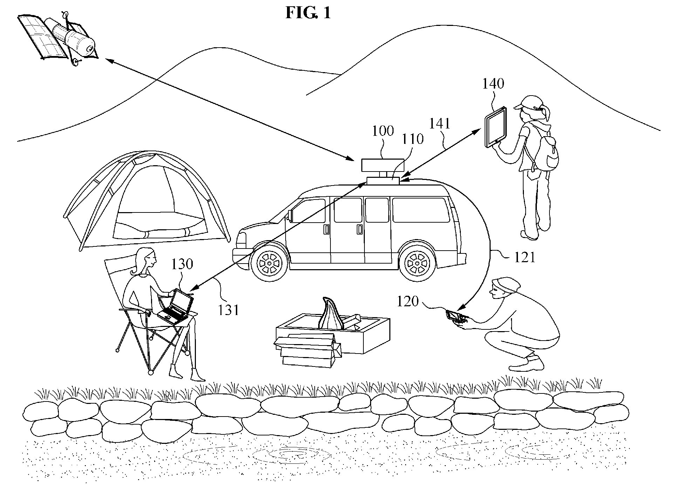

FIG. 1 illustrates an example of a satellite antenna control apparatus.

A satellite antenna control apparatus 110 may receive an image signal transmitted from an artificial satellite through a satellite antenna 100. In an example, the image signal may be transmitted based on at least one of a digital video broadcasting satellite (DVB-S) scheme and a digital video broadcasting satellite terrestrial (DVB-T) scheme.

The satellite antenna control apparatus 110 may convert the received image signal into Internet protocol (IP) data to be transmitted using an IP. In an example, the satellite antenna control apparatus 110 may demodulate a radio frequency (RF) image signal. Specifically, the satellite antenna control apparatus 110 may convert the demodulated RF image signal from one of a DVB-S layer and a DVB-S2 layer into an IP transmission layer.

User terminals, for example, a first user terminal 120, a second user terminal 130, and a third user terminal 140 may transmit requests, for example a first request 121, a second request 131, and a third request 141 for at least one TV channel to the satellite antenna control apparatus 110. The requests may be transmitted through a wireless communication network. In an example, each of the requests may be a request for an image signal corresponding to a different TV channel. In another example, the wireless communication network may include at least one of a Bluetooth communication network, a wireless fidelity (Wi-Fi) communication network, a Z-Wave communication network, a ZigBee communication network, and a worldwide interoperability for microwave access (WiMAX) communication network. FIG. 1 illustrates three user terminals, the first user terminal 120, the second user terminal 130, and the third user terminal 140 as an example. In still another example, a user terminal may be at least one user terminal.

FIG. 1 illustrates the satellite antenna control apparatus 110 attached to a roof of a vehicle as an example. Thus, a position of the vehicle at which the satellite antenna control apparatus 110 is attached may vary depending on an example, and the satellite antenna control apparatus 110 may also be provided in a form detachably attached to the vehicle. Also, the satellite antenna control apparatus 110 may provided in a form attached to a portion of the satellite antenna 100. For example, the satellite antenna control apparatus 110 may be provided in a form attached to a portion opposite to a receiving side.

In an example, a user terminal may be various types of electronic devices configured to receive and replay image data. The user terminal may be one of, for example, a mobile phone corresponding to the first user terminal 120, a tablet computer corresponding to the second user terminal 130, and a laptop computer corresponding to the third user terminal 140. It is obvious to those skilled in the art that the present disclosure is not limited to the aforementioned user terminals.

The satellite antenna control apparatus 110 may allocate IP addresses to the first user terminal 120, the second user terminal 130, and the third user terminal 140 in response to the first request 121, the second request 131, and the third request 141. In an example, when each of the first request 121, the second request 131. and the third request 141 is associated with a different television (TV) channel, the satellite antenna control apparatus 110 may allocate a first IP address to the first user terminal 120, allocate a second IP address to the second user terminal 130, and allocate a third IP address to the third user terminal 140. Also, the satellite antenna control apparatus 110 may extract an image signal of a TV channel corresponding to each of a plurality of requests from IP data. The satellite antenna control apparatus 110 may forward an extracted image signal of a first TV channel to the first IP address, forward an extracted image signal of a second TV channel to the second IP address, and forward an extracted image signal of a third TV channel to the third IP address. Each of the user terminals may access an allocated IP address through the wireless communication network and output an image signal of a desired TV channel. The image signal may be an image signal of, for example, a live TV program video, a sport highlight video, a TV program video previously stored in a satellite antenna control apparatus, and a movie previously stored in the satellite antenna control apparatus. It is obvious to those skilled in the art that the present disclosure is not limited to the foregoing example.

In an example, the satellite antenna control apparatus 110 may also be implemented as a remote control apparatus spaced apart from a satellite antenna to control the satellite antenna. In this example, the user terminals may transmit requests to the remote control apparatus and allocate an IP address to which the remote control apparatus transmits an image signal of a TV channel.

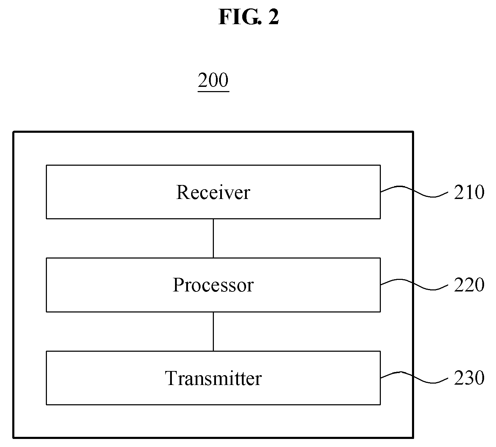

FIG. 2 is a block diagram illustrating an example of a satellite antenna control apparatus.

A satellite antenna control apparatus 200 may include a receiver 210, a processor 220, and a transmitter 230. In an example, the satellite antenna control apparatus 200 may be attached to a flat satellite antenna. In another example, the satellite antenna control apparatus 200 may be attached to an outdoor satellite antenna or a satellite antenna for a vehicle.

The receiver 210 may receive an image signal through a satellite antenna. As an example, the image signal may be an image signal associated with satellite broadcasting. As another example, the receiver 210 may receive at least one of a vertical polarization and a horizontal polarization as the image signal. Also, the receiver 210 may receive a request for at least one TV channel from at least one terminal through a wireless communication network.

The processor 220 may convert the received image signal into IP data corresponding to an IP based transmission. Also, the processor 220 may demodulate the image signal and convert the demodulated image signal into the IP data.

The processor 220 may verify the request received by the receiver 210 from the user terminal. In this example, the processor 220 may verify the number of user terminals corresponding to the number of requests. Based on the number of user terminals, the processor 220 may allocate an IP address to each of the user terminals. Also, the processor 220 may extract an image signal of a predetermined TV channel from the IP data. The transmitter 230 may forward the image signal of the predetermined TV channel to the IP address such that the user terminal accesses the IP address and outputs the image signal. The user may appreciate an image of the TV channel output through the user terminal.

As an example, the receiver 210 may receive a first request for a first TV channel from a first user terminal, and receive a second request for a second TV channel from a second user terminal. The processor 220 may allocate a first IP address to a first user terminal and a second IP address to a second user terminal. Also, the transmitter 230 may forward an image signal for the first TV channel to the first IP address and forward an image signal of the second TV channel to the second IP address. When the second user terminal transmits a third request for the first TV channel, the processor 220 may not allocate a new IP address to the second user terminal, and may forward the image signal of the first TV channel signal to the pre-allocated second IP address. Through this, a satellite antenna control apparatus according to a present disclosure may allow different user terminals to simultaneously output image signals for the same TV channel or different TV channels at different locations. By changing a request for a channel transmitted from a terminal of a user, the user may appreciate an image of a desired TV channel irrespective of a terminal of another user.

The transmitter 230 may forward the image signal of a predetermined TV channel to the IP address such that the user terminal outputs an image signal of a satellite TV. The forwarding may be performed through a wireless communication network. In an example, the wireless communication network may include at least one of a Bluetooth communication network, a Wi-Fi communication network, a Z-Wave communication network, a ZigBee communication network, and a WiMAX communication network.

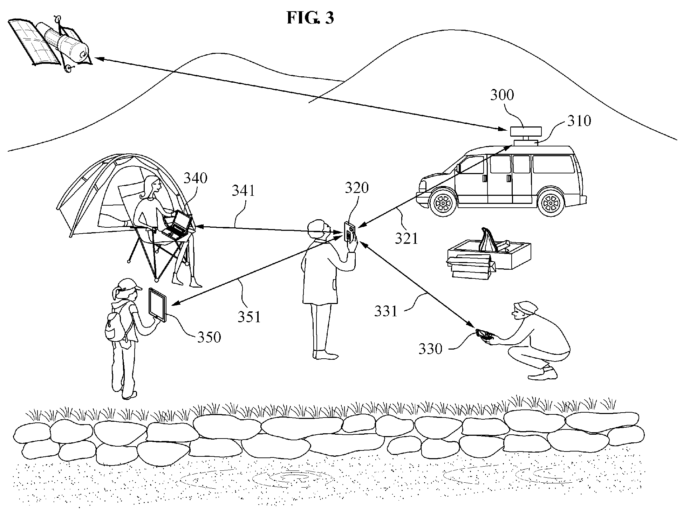

FIG. 3 illustrates an example of a satellite antenna control apparatus including a remote controller.

Referring to FIG. 3, the satellite antenna control apparatus may include a main body 310 of the satellite antenna control apparatus and a remote controller (320). The main body 310 may be disposed separate from the remote controller 320. As an example, the main body 310 of the satellite antenna control apparatus may include the receiver 210, the processor 220, and the transmitter 230 of FIG. 2.

The main body 310 of the satellite antenna control apparatus may receive an image signal. Specifically, the main body 310 may receive an image signal for satellite broadcasting from a satellite antenna 300 through an artificial satellite. In an example, the image signal may be transmitted based on at least one of a DVB-S scheme and a DVB-T scheme. Also, the main body 310 may adjust a location of the satellite antenna 300 to enhance a reception strength of the image signal.

The remote controller 320 may receive location control information from a user. The user may input desired location control information by pushing an input button included in the remote controller 320. The remote controller 320 may perform transmission 321 of the location control information to the main body 310 to adjust a location of the satellite antenna 300. The transmission 321 may be performed through a near filed communication network. For example, the transmission 321 may be performed through a near field communication network using at least one of an IR channel and an RF channel.

In an example, the location control information may be information on an artificial satellite associated with a TV channel to be viewed by the user. In this example, the main body 310 may search for the artificial satellite by calculating at least one of an elevation angle, an azimuth angle, and a skew of the satellite antenna 300 corresponding to the information of the artificial satellite based on global positioning system (GPS) signals. Specifically, the elevation angle may be an angle at which the satellite antenna 300 faces the artificial satellite. Also, the azimuth angle may be a direction of the artificial satellite relative to the location of the satellite antenna 300 and indicated as, for example, north, south, east, and west. The skew may be an angle between a polarization received through the satellite antenna 300 and a ground.

Also, the remote controller 320 may receive a request, for example, a first request 331, a second request 342, and a third request 351 for a TV channel from a user terminal, for example, a first user terminal 330, a second user terminal 340, and a third user terminal 350. The user terminals may transmit a request for a predetermined TV channel to one of the main body 310 and the remote controller 320 separated from the satellite antenna 300. For example, the user terminal may transmit the request for the predetermined TV channel to the receiver 210 of the main body 310. Through this, the user terminal may obtain a wider coverage and a higher strength for receiving an image signal. FIG. 3 illustrates three user terminals, the first user terminal 330, the second user terminal 340, and the third user terminal 350 as an example, and thus, the user terminal may also be at least one more user terminal depending on an example.

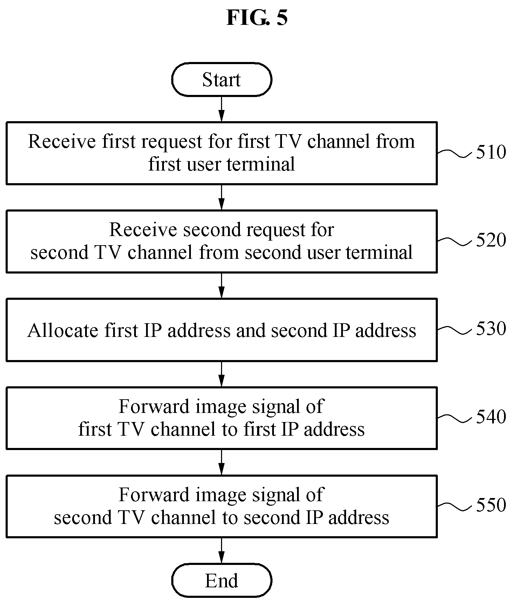

The remote controller 320 may perform the transmission 321 of the request to the main body 310. For example, the remote controller 320 may perform the transmission 321 of the request to the receiver 210 of the main body 310. In this example, the processor 220 of the main body 310 may extract an image signal of a TV channel corresponding to the request from IP data. Also, the processor 220 may verify the number of user terminals corresponding to the number of requests, and allocate an IP address for each of the user terminals based on a result of the verifying. In an example of FIG. 5, the processor 220 may allocate a first IP address to the first user terminal 330, allocate a second IP address to the second user terminal 340, and allocate a third IP address to the third user terminal 350.

The remote controller 320 may receive the image signal of the TV channel corresponding to the request from the main body 310. For example, the remote controller 320 may receive the image signal of the TV channel transmitted from the transmitter 230 of the main body 310. Also, the remote controller 320 may forward the received image signal to the IP address. Through this, the user terminal may access the allocated IP address and output an image signal of a desired TV channel.

In an example, the remote controller 320 may be implemented to be in a handheld form. Additionally, the remote controller 320 may be implemented using a wireless router. Also, the image signal may be one of all image signals to be displayed on a screen. The foregoing examples are not limit the present disclosure and thus, are extendable to examples obvious to those skilled in the art.

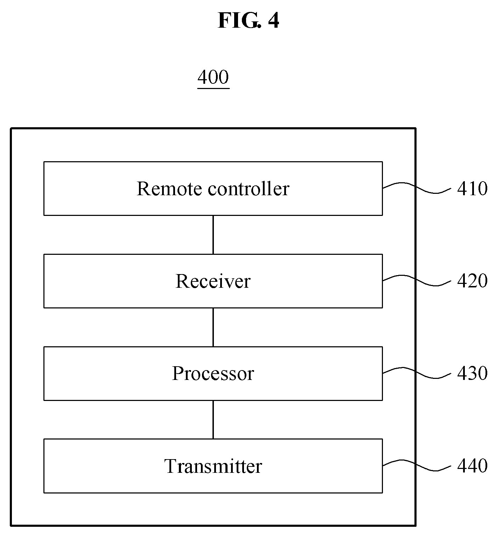

FIG. 4 is a block diagram illustrating another example of a satellite antenna control apparatus.

A satellite antenna control apparatus 400 may include a remote controller 410, a receiver 420, a processor 430, and a transmitter 440. As an example, the remote controller 410 may be provided separate from the processor 430. As another example, the remote controller 410 may be provided in a handheld form. The remote controller 410 may receive location control information from a user. The location control information may be information on an artificial satellite associated with a TV channel to be viewed by the user. In this example, the processor 430 may search for the artificial satellite by calculating at least one of an elevation angle, an azimuth angle, and a skew of a satellite antenna corresponding to the information of the artificial satellite based on GPS signals. Also, the remote controller 410 may receive a first request for a first TV channel from a first user terminal. For example, the receiver 420 may receive a second request for a second TV channel from a second user terminal.

The processor 430 may allocate an IP address to a user terminal in response to a request. In an example, the processor 430 may allocate a first IP address to the first user terminal in response to the first request and allocate a second IP address to the second user terminal in response to the second request. The processor 430 may convert an image signal received by the receiver 420 into IP data corresponding to IP-based transmission. Also, the processor 430 may extract an image signal of the first TV channel and an image signal of the second TV channel from the IP data.

The transmitter 440 may transmit the image signal of the first TV channel to the remote controller 410. In response to the received first request, the remote controller 410 may forward the image signal of the first TV channel to the first IP address such that the first user terminal outputs an image of the first TV channel. Also, the transmitter 440 may directly forward the image signal of the second TV channel to the second IP address. The transmitter 440 may directly forward the image signal of the second TV channel in response to the second request received through the receiver 420. Through this, the second user terminal may access the second IP address and output an image of the second TV channel.

FIG. 5 is a flowchart illustrating an example of a communication method of a satellite antenna control apparatus and a user terminal.

In operation 510, the satellite antenna control apparatus may receive a first request for a first TV channel from a first user terminal. In operation 520, the satellite antenna control apparatus may receive a second request for a second TV channel from a second user terminal. In an example, operations 510 and 520 may be performed by a receiver of the satellite antenna control apparatus. In another example, operations 510 and 520 may also be performed by a remote controller provided separate from a satellite antenna. Additionally, an operation of receiving a plurality of requests for at least one TV channel from a plurality of user terminals may also be performed. Operations 510 and 520 may be performed through a wireless communication network. The wireless communication network may be at least one of a Bluetooth communication network, a Wi-Fi communication network, a Z-Wave communication network, a ZigBee communication network, and a WiMAX communication network. The first TV channel may differ from the second TV channel. The first TV channel may also be the same as the second TV channel.

Operation 530 may be an operation of allocating a first IP address to the first user terminal in response to the first request and allocating a second IP address to the second user terminal in response to the second request. Additionally, when a third request for a third TV channel is received from the first user terminal or the second user terminal, a pre-allocated IP address may be used in lieu of allocating a new IP address. In an example, operation 530 may be performed by the processor 220 or the processor 430. Also, operation 530 may be performed using a wireless router device.

Operation 540 may be an operation of forwarding an image signal of the first TV channel to the first IP address. Operation 550 may be an operation of forwarding an image signal of the second TV channel to the second IP address. The first user terminal and the second user terminal may access the first IP address and the second IP address, thereby outputting image signals of desired TV channels.

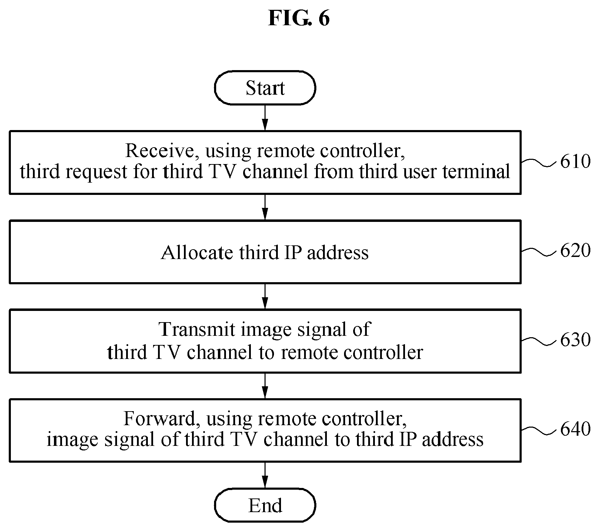

FIG. 6 is a flowchart illustrating another example of a communication method of a satellite antenna control apparatus and a user terminal.

In operation 610, a remote controller may receive a third request for a third TV channel from a third user terminal. In an example, the remote controller may be spaced apart from a main body of the satellite antenna control apparatus to transmit a control signal. Also, the remote controller may be provided in a handheld form. The third TV channel may differ from the first TV channel and the second TV channel described with reference to FIG. 5.

In an example, the third user terminal may select one of a transmitter of the satellite antenna control apparatus and the remote controller of the satellite antenna control apparatus to transmit the third request for the third TV channel based on a location of the third user terminal. For example, the third user terminal may select a target to which the third request is transmitted based on a quality of signal (QoS) for a random access.

A wireless communication coverage in which the third user terminal transmits and receives data through the satellite antenna control apparatus may be defined as a coverage C1. In this example, the coverage C1 may be in a circular shape having a radius r1 corresponding to a maximum distance allowing the third user terminal spaced apart from the satellite antenna to transmit and receive data. Also, a radius r2 may be, for example, a maximum distance allowing the third user terminal spaced apart from the remote controller provided separate from the satellite antenna, to transmit and receive the data. In the present embodiment, the remote controller may autonomously forward an image signal of a predetermined TV channel to an IP address and thus, a user may freely use a user terminal in a range corresponding to r1 + r2. In this example, a range corresponding to the radius r2 may be additionally obtained when compared to a range corresponding to the radius r1 obtained using a typical satellite antenna. By implementing the remote controller having a data forwarding function, a range allowing the user terminal to receive the data based on the satellite antenna may increase such that the user located separate from the satellite antenna appreciates desired image without restrictions on activities.

Operation 620 may be an operation of allocating a third IP address to the third user terminal. In an example, operation 620 may be performed by the processor 220 of the satellite antenna control apparatus. Additionally, an operation in which the remote controller transmits the third request to the receiver 210 of the satellite antenna control apparatus may also be performed. In this example, the receiver 210 may receive the third request, and the processor 220 may allocate the third IP address to the third user terminal in response to the third request.

Operation 630 may be an operation of transmitting an image signal of the third TV channel to the remote controller. Additionally, an operation of extracting the image signal of the third TV channel from the IP data may also be performed. In an example, operation 630 may be performed by the processor 220 the satellite antenna control apparatus.

In operation 640, the remote controller may forward the received image signal of the third TV channel to the third IP address. The third user terminal may access the third IP address and output an image signal of a desired TV channel.

Data transmission performed in operations 610, 630, and 640 may be performed through a wireless communication network. In an example, the wireless communication network may be at least one of a Bluetooth communication network, a Wi-Fi communication network, a Z-Wave communication network, a ZigBee communication network, and a WiMAX communication network.

The units described herein may be implemented using hardware components and software components. For example, the hardware components may include microphones, amplifiers, band-pass filters, audio to digital convertors, and processing devices. A processing device may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such a parallel processors.

The software may include a computer program, a piece of code, an instruction, or some combination thereof, for independently or collectively instructing or configuring the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. In particular, the software and data may be stored by one or more computer readable recording mediums.

The methods according to the above-described embodiments may be recorded, stored, or fixed in one or more non-transitory computer-readable media that includes program instructions to be implemented by a computer to cause a processor to execute or perform the program instructions. The media may also include, alone or in combination with the program instructions, data files, data structures, and the like. The program instructions recorded on the media may be those specially designed and constructed, or they may be of the kind well-known and available to those having skill in the computer software arts. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations and methods described above, or vice versa.

Although a few embodiments of the present disclosure have been shown and described, the present disclosure is not limited to the described embodiments. Instead, it would be appreciated by those skilled in the art that changes may be made to these embodiments without departing from the principles and spirit of the invention, the scope of which is defined by the claims and their equivalents.

## Claims

1. A satellite antenna control apparatus comprising:
a receiver configured to receive an image signal through a satellite antenna, receive a first request for a first television (TV) channel from a first user terminal, and receive a second request for a second TV channel from a second user terminal;
a processor configured to convert the image signal into Internal protocol (IP) data corresponding to IP-based transmission, allocate a first IP address to the first user terminal in response to the first request, and allocate a second IP address to the second user terminal in response to the second request; and
a transmitter configured to forward an image signal of the first TV channel extracted from the IP data to the first IP address and forward an image signal of the second TV channel extracted from the IP data to the second IP address such that each of the first user terminal and the second user terminal outputs an image of a corresponding TV channel.

2. The satellite antenna control apparatus of claim 1, wherein the transmitter is configured to use a wireless communication network to forward the image signal of the first TV channel to the first IP address and forward the image signal of the second TV channel to the second IP address, and the wireless communication network includes at least one of a Bluetooth communication network, a wireless fidelity (Wi-Fi) communication network, a Z-wave communication network, a ZigBee communication network, and a worldwide interoperability for microwave access (WiMAX) communication network.

3. The satellite antenna control apparatus of claim 1, further comprising:
a remote controller configured to receive location control information from a user and transmit the received location control information to the processor such that the processor adjusts a location of the satellite antenna,
wherein the remote controller is separable from the processor and configured to, through a separation from the processor, perform a remote control on the processor using a near filed communication network.

4. The satellite antenna control apparatus of claim 3, wherein the location control information is information on an artificial satellite associated with at least one of the first TV channel and the second TV channel, and the processor is configured to search for the artificial satellite by calculating at least one of an elevation angle, an azimuth angle, and a skew corresponding to the information on the artificial satellite based on global positioning system (GPS) signals.

5. The satellite antenna control apparatus of claim 3, wherein the near field communication network is based on at least one of an infrared ray (IR) channel and a radio frequency (RF) channel.

6. The satellite antenna control apparatus of claim 3, wherein when the remote controller receives a third request for a third TV channel from a third user terminal, the processor is configured to allocate a third IP address to the third user terminal in response to the third request, and the remote controller is configured to receive an image signal of the third TV channel extracted from the IP data from the transmitter and forward the received image signal to the third IP address such that the third user terminal outputs an image of the third TV channel.

7. An image signal communication method comprising:
receiving a first request for a first television (TV) channel from a first user terminal;
receiving a second request for a second TV channel from a second user terminal;
allocating a first Internet protocol (IP) address to the first user terminal in response to the first request;
allocating a second IP address to the second user terminal in response to the second request; and
forwarding an image signal of the first TV channel to the first IP address and forwarding an image signal of the second TV channel to the second IP address.

8. The image signal communication method of claim 7, further comprising:
receiving an image signal;
converting the image signal into IP data corresponding to an IP-based transmission; and
extracting the image signal of the first TV channel and the image signal of the second TV channel from the IP data.

9. The image signal communication method of claim 7, further comprising:
receiving, by a remote controller separated from a satellite antenna, a third request for an image signal of a third TV channel from a third user terminal;
allocating a third IP address to the third user terminal through the remote controller in response to the third request; and
forwarding, by the remote controller, the received image signal of the third TV channel to the third IP address.

10. A remote control apparatus comprising:
a receiver configured to receive a first request for a first television (TV) channel from a first user terminal, receive a second request for a second TV channel from a second user terminal, receive first Internet protocol (IP) data corresponding to the first request from a satellite antenna, and receive second IP data corresponding to the second request from the satellite antenna;
a processor configured to allocate a first IP address to the first user terminal in response to the first request and allocate a second IP address to the second user terminal in response to the second request;
a transmitter configured to forward an image signal of the first TV channel corresponding to the first IP data to the first IP address and forward an image signal of the second TV channel corresponding to the second IP data to the second IP address such that each of the first user terminal and the second user terminal outputs an image of a corresponding TV channel; and
a controller configured to control the processor to adjust a location of the satellite antenna by receiving location control information from a user and transmitting the received location control information to the processor.

11. The remote control apparatus of claim 10, wherein the location control information is information on an artificial satellite associated with at least one of the first TV channel and the second TV channel, and the processor is configured to search for the artificial satellite by calculating at least one of an elevation angle, an azimuth angle, and a skew of the satellite antenna corresponding to the information on the artificial satellite based on global positioning system (GPS) signals.
